(19) Europäisches Patentamt / European Patent Office / Office européen des brevets

(11) **EP 3 921 911 B1**

(12) **EUROPEAN PATENT SPECIFICATION**

(45) Date of publication and mention
of the grant of the patent:
**05.03.2025 Bulletin 2025/10**

(21) Application number: **20705396.8**

(22) Date of filing: **31.01.2020**

(51) International Patent Classification (IPC):
*H02H 9/08* (2006.01)    *H01F 30/12* (2006.01)
*H01F 27/38* (2006.01)    *H01F 27/42* (2006.01)

(52) Cooperative Patent Classification (CPC):
**H01F 27/38; H01F 30/12; H02H 9/08;** H01F 27/42

(86) International application number:
**PCT/FI2020/050061**

(87) International publication number:
**WO 2020/161388 (13.08.2020 Gazette 2020/33)**

(54) **ARC SUPPRESSION COIL AND METHOD FOR GROUNDING**

LICHTBOGENUNTERDRÜCKUNGSSPULE UND VERFAHREN ZUR ERDUNG

BOBINE DE SUPPRESSION D'ARC ET PROCÉDÉ DE MISE À LA TERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2019 FI 20195072**

(43) Date of publication of application:
**15.12.2021 Bulletin 2021/50**

(73) Proprietor: **Ensto Oy**
**06100 Porvoo (FI)**

(72) Inventor: **PENTTONEN, Jyrki**
**00170 Helsinki (FI)**

(74) Representative: **Papula Oy**
**P.O. Box 981**
**00101 Helsinki (FI)**

(56) References cited:
**CN-A- 108 845 223    CN-A- 110 086 161
CN-Y- 2 202 369    CN-Y- 2 648 670
RU-C1- 2 611 061**

## Description

### FIELD

The present disclosure relates to arrangements for electric power networks. In particular, the disclosure relates to a grounding arrangement. More in particular, the disclosure relates to an arc suppression coil for a three-phase electric power network and a method of grounding a three-phase electric power network.

### BACKGROUND

Electric power networks such as medium voltage distribution networks have various different protection and grounding configurations such as a resistance-earthed grounding configuration, an isolated network configuration and a resonant-earthed network configuration, which are used in different installations and have different advantages. The resonant-earthed configurations include a compensated network configuration, where a Petersen coil is used to provide inductive reactance that compensates capacitive earth faults in the network. Typically, such a configuration includes an earthing transformer, a Petersen coil and a high-power resistor.

As an example, CN 2202369 Y discloses a kind of inductive reactance value can change self-regulating arc suppression coil.

### OBJECTIVE

An objective is to improve performance of the current arrangements for grounding an electric power network, where the electric power network is a compensated network.

Moreover, it is an objective to provide a more efficient construction for grounding the electric power network.

### SUMMARY

The present disclosure involves an arc suppression coil, also known as a Petersen coil (ASC). The arc suppression coil is adapted to be operated in a three-phase electric power network, which may be a medium-voltage network and/or a distribution network. The arc suppression coil is adapted not only to provide inductive compensation for capacitive earth faults in the electric power network but also to facilitate grounding of the electric power network, in particular without a zigzag winding for grounding the three-phase electric power network. This allows the electric power network to be grounded without a separate earthing According to the invention there is provided an arc suppression coil for a tree-phase electric power network as defined in claim 1.

Furthermore, also according to the invention, there is provided a method of grounding a three-phase electric power network as defined in claim 12.

Further developments of the invention are defined by the dependent claims.

According to a first aspect, an arc suppression coil for a three-phase electric power network comprises a transformer core. The transformer core has three limbs, comprising a first limb, a second limb and a third limb, allowing one limb to be dedicated to facilitate grounding for each of the three phases of the electric power network. In addition to the three limbs, the transformer core defines an additional path for carrying magnetic flux between the opposite ends of the three limbs. As the additional path is outside the three limbs, it allows forming a return path for the magnetic fluxes going through the three limbs. The arc suppression coil comprises three separate phase windings comprising a first phase winding wound at the first limb of the transformer core, a second phase winding wound at the second limb of the transformer core and a third phase winding wound at the third limb of the transformer core. The phase windings are separate for the three phases of the electric power network allowing the arc suppression coil to be adapted for each of the three phases of the three-phase electric power network to be connected to ground through exactly one of the three phase windings.

As the phase component of the magnetic flux substantially cancels out outside the three limbs, when the magnetic fluxes going through each of the three limbs are joined, the additional path can be adapted to carry zero sequence flux. The positive sequence flux in the additional path can thereby be zero or substantially zero. When there is asymmetry in the phase voltages of the three-phase electric power network, such as in the event of an earth fault, leakage flux may be generated in the arc suppression coil. The structure of the arc suppression coil allows the transformer core to be adapted for leakage flux in the arc suppression coil to be directed through the additional path, thereby providing compensation with respect to the source of the asymmetry, e.g. an earth fault. The additional path allows controlling zero sequence impedance independently from positive sequence impedance of the arc suppression coil and/or the network. In addition to providing the inductive earth-fault compensation, which traditionally is provided by separate arc suppression coils, the structure allows the present arc suppression coil to function also as an earthing transformer for the electric power network so that there is no need for two separate apparatuses. In particular, since no earthing transformer is needed. At the same time, the traditional zigzag winding configuration of an earthing transformer can be replaced by the separate phase windings, which has been found to allow further reduction in the size of the transformer core. Even if some opposing windings were maintained on the three limbs, e.g. in a configuration reminiscent of a conventional zigzag winding having substantially equal number of turns in both layers of windings, the number of turns in two opposing windings would be substantially different, e.g. such that the ratio of turns in each two pairs of opposing windings is at least 5-10, meaning each of the three limbs is essentially dedicated to windings corresponding to only one phase of the network. The reduction in the size of the transformer core, may allow notable reductions in material used since the mass of an earthing transformer in typical applications can exceed 1 or 2 tons.

In an embodiment, the arc suppression coil comprises means for adjusting reluctance of the additional path. This allows the arc suppression coil to act as tunable inductance for the electric power network so that the inductance provided by the arc suppression coil for compensating capacitive earth faults can be adjusted based on changing requirements for the capacitance to be compensated. The requirements may change, for example, depending on the location of the earth fault or when the size or the properties of the network change. In particular, the means for adjusting reluctance may be adapted for adjusting reluctance of the additional path even when an earth fault is present in the electric power network. This allows adjusting the inductance of the electric power network, also when the earth fault is present. This, in turn, allows situation-specific adjustment for optimizing the compensation provided by the arc suppression coil, for example by allowing the inductance of the network to be adjusted based on the actual capacitance of the network during the earth fault. This allows minimizing the fault current even when the capacitance of the network differs depending on the location of the earth fault. The means for adjusting reluctance of the additional path may comprise a virtual air gap adapted for adjusting the reluctance of the additional path. The means such as a virtual air gap allow substantially linear operation of the arc suppression coil.

It is noted that other means for varying the impedance of the arc suppression coil can also be used for tuning the arc suppression coil, including stepwise variation of impedance and other means. For example, impedance of the arc suppression coil may be varied by the arc suppression coil having one or more variable impedance windings, for example at the additional path, which can be adapted for varying the zero sequence impedance of the electric power network. Such a variable impedance winding may be formed, for example, by a switched capacitor bank. The one or more variable inductance windings may comprise, for example, one or more capacitors adapted for adjusting the impedance of the arc suppression coil, or zero sequence impedance of the electric power network in particular.

In an embodiment, the means for adjusting reluctance of the additional path comprise one or more control windings for the additional path. This allows electrical control of the reluctance of the additional path and thereby the inductance of the arc suppression coil for compensating capacitive earth faults. The one or more control windings may be adapted for magnetically saturating the material of the additional path to increase reluctance. The one or more control windings may thus be adapted for forming a virtual air gap for the additional path, for example at a limb, such as a fourth limb, and/or a yoke of the transformer core.

In an embodiment, the transformer core comprises a fourth limb and the additional path goes through the fourth limb. This allows the additional path to be integrated in the transformer core as a simple structure that can be efficiently formed and whose properties can be easily controlled. A four limb earth fault compensating reactor can be designed using the practices for designing ordinary three phase reactors. For example, the differences can be limited to allowing magnetic flux in the limbs to be half of what is normally allowed in reactor design. This is due to the magnetic flux generated in the transformer core due to fault current of the earth fault. This gives a straightforward framework for transformer manufacturers to work on.

In an embodiment, the reluctance of one or more, or even all, of the three limbs is larger than the minimum reluctance of the additional path. This allows the additional path to carry more flux than the corresponding limb or limbs, thereby optimizing the additional path for savings in material resources. For example, the cross-sectional area of one, two or three of the three limbs for defining the reluctance of the corresponding limb may be larger than the cross-sectional area of the additional path for defining the reluctance of the additional path. Since the reluctance of the additional path can be adjustable, it may be possible to still adjust the reluctance of the additional path to exceed the reluctance of any or all of the three limbs.

In an embodiment, the number of turns in the three phase windings is equal or substantially equal. In another embodiment, the reluctance of the first limb, the second limb and the third limb is equal or substantially equal. These allow mitigating asymmetries in the arc suppression coil. The three limbs may have equal or substantially length and/or cross-sectional area.

According to the invention, the arc suppression coil comprises an additional winding for the additional path. The additional winding is wound in direction of subtractive polarity with respect to the three phase windings allowing the zero sequence flux in the transformer core to be compensated even if the number of turns in the phase windings is increased. The additional winding is connected in series with respect to a combined output of the three phase windings allowing it to be connected between the phase windings and the ground of the electric power network. The additional winding provides an additional degree of freedom for compensating reactive power in the electric power network. In particular, it allows the number of turns in the phase windings to be increased, to decrease positive sequence flux, without decreasing the zero sequence flux, which works to compensate the reactive power in the electric power network. The number of turns in the phase windings and in the additional winding can therefore be adapted to obtain a desired ratio of positive sequence flux and zero sequence flux in the arc suppression coil, e.g. from one, implying even amounts, to substantially zero, implying negligible positive sequence flux. In an embodiment, the additional winding is wound around the transformer core, for example around a limb, such as the fourth limb, and/or a yoke of the transformer core.

In an embodiment the number of turns in the additional winding is at most 11 percent, for example 3-9 percent, of the total number of turns in the three phase windings. This allows saving material in the winding while ensuring the functioning of the winding for the compensating zero sequence flux. In an embodiment the number of turns in the additional winding is 4-8 percent of the total number of turns in the three phase windings. In particular, an upper limit of at most 8 percent has been found to allow notable improvement in controllability of the arc suppression coil so that the tradeoff of having a smaller portion of positive sequence flux may be accepted for many applications. All values quoted above for the number of turns are particularly appropriate in a typical situation where the number of turns in the three phase windings is substantially equal.

According to a second aspect, an arrangement for grounding a three-phase electric power network comprises an arc suppression coil according to the first aspect or any combination of its embodiments. The arc suppression coil comprises an output connection, for example directly from the phase windings or from the additional winding as described above. The arrangement comprises means for connecting the three-phase electric power network to ground directly from the output connection.

According to a third aspect, a method of grounding a three-phase electric power network is disclosed. The three phase lines of the three-phase electric power network are connected to ground through an arc suppression coil comprising a transformer core having a separate limb and a separate phase winding for each of the three phases of the three-phase electric power network for facilitating a grounding connection. The transformer core defines also an additional path for carrying magnetic flux between the opposite ends of each of the separate limbs allowing a return path to be formed for the magnetic flux for each of the separate limbs. In an embodiment, the arc suppression coil is directly connected to ground. A single apparatus can therefore be used for both grounding the electric power network and providing the earth fault compensation. In an embodiment, the arc suppression coil is the arc suppression coil according to the first aspect or any combination of its embodiments.

The construction of the arc suppression coil allows various features to be easily integrated in the arc suppression coil. For example, the arc suppression coil may comprise a power supply connection adapted for transmitting power from the electric power network through the arc suppression coil to another network such as a low-voltage network. The power supply connection comprises, for example, a set of windings, such as low-voltage windings, wound at the three limbs of the transformer core for drawing power from the electric power network. The set of windings are adapted for grounding and they may be in zigzag configuration with respect to the three limbs of the transformer core. The set of windings has an output, which can be a three-phase output, for drawing power from the electric power network. The power supply connection can be maintained even during an earth fault, when only phase voltages change and the line voltages are not affected. This can be guaranteed by the set of windings having a zigzag configuration.

As another example, the arc suppression coil may be adapted for connecting a resistive circuit to the arc suppression coil for drawing power from the electric power network. The resistive circuit can be coupled to the additional path through a winding so that current can be induced into the resistive circuit in from the magnetic flux flowing through the additional path. This increase resistive current can be detected by a protective relay of the electric power network resulting in tripping of the relay protecting a feeder with an earth fault. The resistive circuit may comprise a switch for closing the circuit, allowing the circuit to be selectively activated, for example if the earth fault has persisted for a threshold time.

It is to be understood that the aspects and embodiments described above may be used in any combination with each other. Several of the aspects and embodiments may be combined together to form a further embodiment.

## BRIEF DESCRIPTION OF THE DRAWINGS

The accompanying drawings, which are included to provide a further understanding and constitute a part of this specification, illustrate embodiments and together with the description help to explain the principles of the invention. In the drawings:

**Fig. 1** illustrates a general system for grounding an electric power network,
**Fig. 2** illustrates grounding an electric power network with an arc suppression coil according to an example,
**Fig. 3** illustrates grounding an electric power network with an arc suppression coil according to another example,
**Fig. 4** illustrates grounding an electric power network with an arc suppression coil according to yet another example, and
**Fig. 5** is a schematic diagram of a system for operating an arc suppression coil according to an example, and

Like references are used to designate equivalent or at least functionally equivalent parts in the accompanying drawings.

## DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

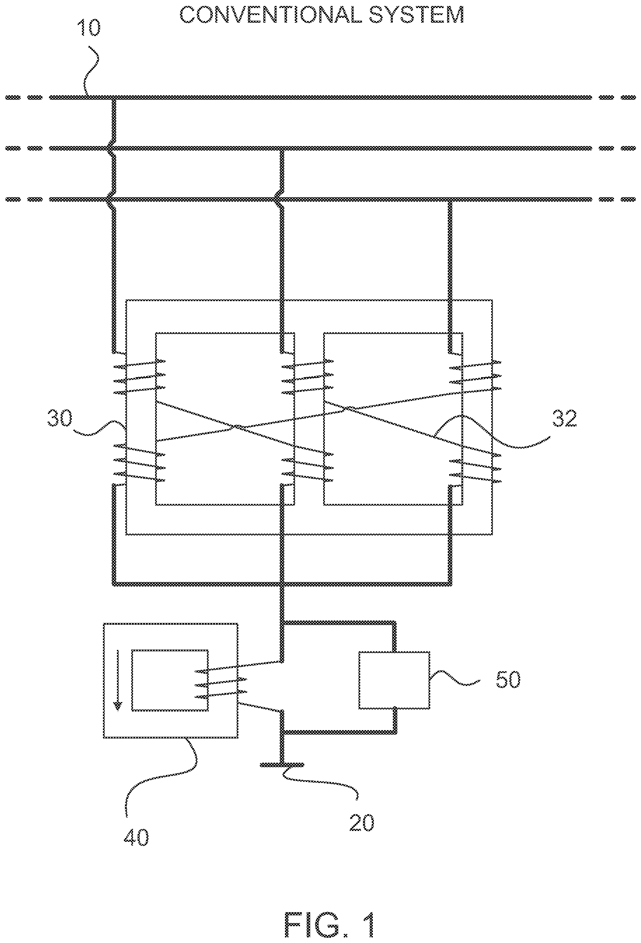

Figure 1 shows an example of what a general system for grounding a three-phase electric power network could look like when schematically described in view of the present solution. The network 10 is connected to ground 20 through an earthing transformer 30. Typically to delta-connected networks, the earthing transformer has a zigzag winding 32. In a compensated network, the system comprises a Petersen coil 40 for compensating capacitive earth faults. In addition, the system comprises means 50 such as an oil-immersed high-power resistor to be connected in parallel with the Petersen coil 30.

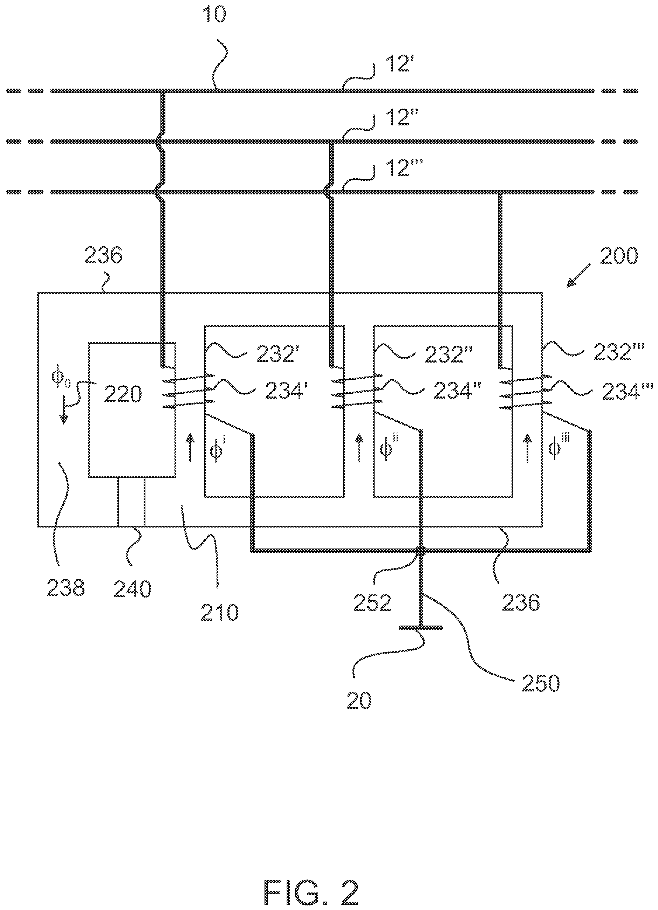

Figure 2 shows an example of grounding an electric power network 10 with an arc suppression coil 200 (ASC). The electric power network 10 (below also "the network") is a three-phase network, typically a medium voltage and/or a distribution network, having an operating frequency, e.g. 50-60 Hz, which may be substantially constant. The network 10 may comprise a bus such as a substation bus for connecting the ASC 200 to the network 10. Each of the three phase lines 12', 12'', 12''' of the network 10 are separately connected to the ASC 200, for example from the bus. The ASC 200 provides the grounding connection to the network 10 and it may be directly connected to ground 20 by means for grounding such as grounding connectors. The ASC 200 can be located at an electrical substation having a substation primary transformer for converting high voltage to medium voltage. In a typical example, the network 10 is a delta-connected network, i.e. the substation primary transformer is delta connected. Many of the advantageous effects of the present arc suppression coil are applicable particularly to delta-connected networks but the ASC 200 can be applied also together with other network configurations such as with a star-connected network.

The arc suppression coil 200 comprises a transformer core 210, which may be formed as a monolithic piece. The transformer core 210 is made of material capable of supporting a magnetic flux, for example of metal, such as iron. The transformer core 210 may be a laminated core, in which case the laminates of the core may be formed as monolithic pieces. The transformer core 210 comprises three limbs 232: a first limb 232', a second limb 232'' and a third limb 232'''. Each of the limbs creates a path for magnetic flux $\phi$, as in a conventional three-limb reactor. The magnetic flux $\phi^{i, \, ii, \, iii}$ in different limbs may be substantially equal in magnitude but it may also vary. The three limbs 232 can be made of substantially equal size and material so that their reluctance is substantially equal. The transformer core 210 typically comprises also one or more yokes 236 for connecting the limbs to each other. A first yoke may be connected the three limbs at the first end of the limbs 232, whereas a second yoke may connect the three limbs 232 at the second end of the limbs 232, e.g. the opposite end of the limbs 232. Consequently, the transformer core 210 can be substantially shaped as two conjoined loops with a central limb 232'' joining the two loops and the two other limbs 232', 232''' forming the two sides of the two loops. With respect to the three limbs 232, the transformer core can thereby be shaped substantially as a conventional three-phase reactor. While the transformer core 210 generally forms closed paths for the magnetic flux, it is noted that, in some configurations, the transformer core may comprise one or more physical discontinuities, such as air gaps, so that at least a part of one or more closed paths is outside the transformer core 210 or in a part of the transformer core having different magnetic properties with respect to an adjacent part of the magnetic core 210 on the closed path. Such discontinuities may be used to alter the reluctance of the transformer core 210.

The arc suppression coil 200 comprises three separate phase windings 234, such as medium-voltage windings, for facilitating a grounding connection for the network 10. The phase windings 234 are windings adapted for coupling to one of the three phase lines of electric power network 10 through a conductive connection. Moreover, they are adapted to facilitate grounding of the phase line. A first phase winding 234' is wound around the first limb 232', a second phase winding 234'' is wound around the second limb 232'' and a third phase winding 234''' is wound around the third limb 232'''. Each of the three phase windings 234 is dedicated to a single phase of the three-phase electric power network 10. Correspondingly, each of the three limbs 232 can be dedicated to facilitate a grounding connection for exactly one phase of the three-phase electric power network 10. The structure of the ASC 200 allows such a straight grounding connection to be made, in contrast to a conventional zigzag winding for delta-connected medium-voltage networks. This has been found to allow notable reduction in the required size of the transformer core 210 in comparison to a situation where the ASC would have zigzag windings. This can be seen, for example, as reduced requirement for iron in the transformer core 210. In any case, and even if the first limb 232' remains coupled to two or more phases of the network 10, the number of turns of all phase windings wound at the first limb 232' and dedicated for one of the three phases of the three-phase network 10, such as the first phase winding 234', can be at least 83-91 percent of the total number of turns of all phase windings, regardless of phase, wound around the first limb 232', while still allowing an essential reduction in the required mass for the transformer core 210. The same holds for all of the three limbs 232, including the second limb 232'' and the third limb 232'''. Consequently, the number of turns of all phase windings wound at exactly one of the three limbs 232 and dedicated for exactly one of the three phases of the three-phase network 10 can be at least 83-91 percent of the total number of turns of all phase windings, regardless of phase, wound around the corresponding limb, while still allowing an essential reduction in the required mass for the transformer core 210.

The three phase windings 232 are generally wound in the direction of additive polarity with respect to each other. The phase windings 234, as any other windings described herein, are made of electrically conductive material, for example of metal, such as copper. The number of turns in each of the three phase windings can be more than 100. In an example, each of the phase windings 234 comprises at least 100 turns, for example 200-1500 turns, and the number of turns in different phase windings 234 may be substantially equal.

The input of each of the three phase windings 234 is coupled, directly or indirectly, to one of the three phase lines of the network 10, for example by a connection to the bus. The output of the three phase windings 234 may be connected to ground 20 separately or as a combined output 250. The output of the three windings 234 may be combined for example by connecting the output from each of the three phase windings 234 to a connector 252 adapted to be connected to ground, for example by a grounding wire.

In addition to the three limbs 232, the transformer core 210 defines an additional path 220 for carrying magnetic flux between the opposite ends of the three limbs 232. The additional path 220 is outside the three limbs 232 provides a return path for the magnetic flux from the first of a limb to the second end of the limb for each of the three limbs 232. This allows leakage flux to be directed into the additional path 220 during an earth fault to compensate for the capacitive earth fault. The additional path may be formed partially or wholly in the transformer core 210, for example through a fourth limb 238 and/or one or more yokes 236 of the transformer core 210. The additional path 220 may, for example, be formed as a loop with one open side connected to the three limbs 232, e.g. as a substantially C- or U-shaped loop. The additional path 220 may be dimensioned for a desired amount of flux and its reluctance may be smaller than the reluctance of any or all of the three limbs 232. The additional path 220 can be specifically adapted for carrying zero sequence flux, which may be taken account in the dimensioning of the additional path 220.

The arc suppression coil 200 may optionally comprise means 240 such as an actuator for adjusting reluctance of the additional path 220. The means 240 may be adapted for continuous adjustment of reluctance. The means 240 may be adapted for adjusting the reluctance when the earth fault is present in the network 10. The means 240 may be adapted the reluctance to be adjusted electrically, wholly or at least partially. With electrical control of the reluctance of the additional path 220, no motors and/or moving parts are required, which may allow the size, cost and maintenance requirements of the ASC 200 to be reduced. For example, the means 240 may be adapted to form a virtual air gap in the additional path 220 to for increasing the reluctance of the additional path 220. The means 240 may be adapted for the reluctance of to be varied by at least a factor of 2-10.

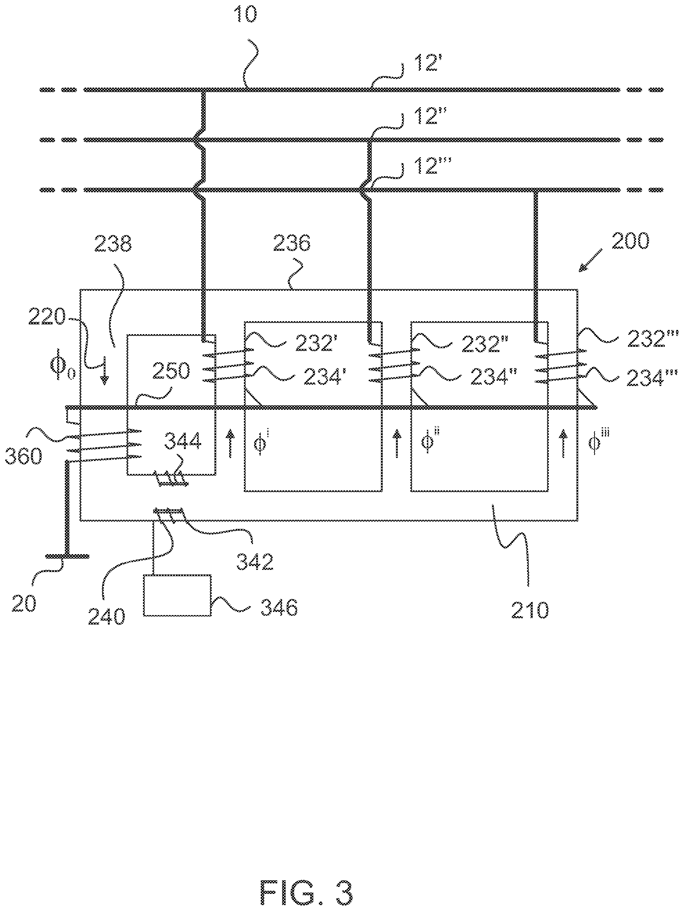

Figure 3 shows an example of grounding an electric power network 10 with the ASC 200. While the ASC 200 may otherwise be in accordance with any combination of examples above, it may also comprise an additional winding 360 for the additional path 220. The additional winding 360 is wound at the additional path 220 and it can be wound around the additional path 220 for example around the fourth limb 238 and/or a yoke 236 of the transformer core 210. While all three phase windings 234 are wound in the same direction with respect to each other, the additional winding 360 is wound in a direction opposite to that of the three phase windings 234. This means that the additional winding 360 is wound in direction of subtractive polarity with respect to the three phase windings 234, effectively allowing the ASC 200 to draw zero sequence flux through the additional path 220. The additional winding 360 is connected in series with respect to the combined output 250 of the three phase windings 234 and it may be directly connected after the three phase windings 234. The additional winding 360 is located between the phase windings 234 and the ground 20 of the electric power network 10 and it may be directly connected to ground 20.

The number of turns in the additional winding 360 is typically smaller or even much smaller than that in any of the phase windings 234. For example, when the phase windings 234 have less than 2000 turns in total, the additional winding may have less than 100-200 turns. When the phase windings 234 have less than 3000 turns in total, the additional winding may have less than 200-300 turns. When the three phase windings 234 have less than 4000-5000 turns in total, the additional winding may have less than 400 turns.

As an additional or alternative feature, figure 3 illustrates one example for providing the means 240 for adjusting reluctance of the additional path 220. In an example the means 240 comprise one or more control windings 342 wound at the additional path 220 for adjusting reluctance at the additional path 220. The one or more control windings 342 may be wound partially or fully around the transformer core 210, e.g. through the transformer core 210. For example, a control winding 342 may be wound around or through a limb, such as the fourth limb 238, and/or a yoke 236 of the transformer core 210. The transformer core 210 may comprise one or more through-holes 344 adapted for winding a control winding 342 through the transformer core 210. The one or more control windings 342 may be direct current (dc) windings but it is also possible to use alternating current (ac) windings for this purpose. The one or more control windings 342 are adapted for receiving current from a power supply unit 346, which may be controlled by a controller such as a remote terminal unit (RTU). The controller may also be integrated with the power supply unit.

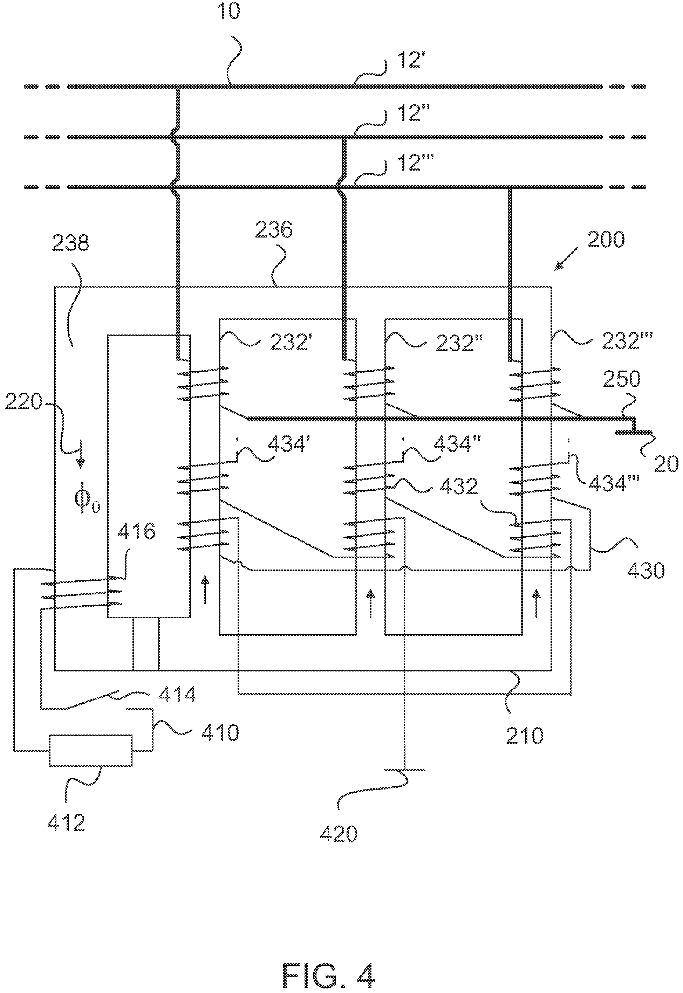

Figure 4 shows an example of grounding an electric power network 10 with the ASC 200. While the ASC 200 may otherwise be in accordance with any combination of examples above, it may also be adapted for connection with a resistive circuit 410, where the resistive circuit 410 can be an external circuit 410 or an integral part of the ASC 200. The resistive circuit 410 comprises a resistive element 412 for drawing active power from the network 10 to trip one or more protective relays of the network 10. The resistive circuit 410 may also comprise a switch 414 adapted for closing the resistive circuit 410 so that it may draw power from the ASC 200. The resistive circuit 410 can be coupled to the ASC 200 through a winding 416 adapted for inducing current into the resistive circuit 410 from the magnetic flux flowing in the ASC 200. The winding 410 may be wound at the transform core 210, for example at the additional path 220. The ASC 200 may comprise the winding 416, for example at a limb, such as the fourth limb 238, and/or at a yoke 236 of the transformer core 210.

As an additional or alternative feature, figure 4 illustrates one example for providing means in the ASC 200 for outputting power from the three-phase electric power network 10 through the ASC 200. This can be used, for example, to provide low-voltage power supply from the ASC 200. For these purposes, the ASC 200 may comprise a power supply connection 430 having a set of windings 432, for example low-voltage windings, adapted for drawing power from the three-phase electric power network 10 through the transformer core 210. The set of windings 432 may be wound around the three limbs 232 of the transformer core 210 allowing three-phase current to be generated through the set of windings 432. The set of windings 432 may be formed as a zigzag winding. The set of windings 432 is coupled to one or more outputs 434 of the power supply connection 430 for transmitting power from the power supply connection 430. The one or more outputs 434 may comprise three phase outputs 434', 434'', 434''' adapted for outputting three-phase electric current. The one or more outputs 434 may comprise one or more electric sockets. The set of windings 432 are adapted for coupling to ground 420 for grounding. While the set of windings 432. It is noted that while the set of windings 432 may be wound, at least partially, around one or more of the three limbs 432, they need not be conductively connected to any of the three phase windings 232. The three phase windings 232 are adapted for grounding the three-phase electric power network 10, whereas the set of windings 434 of the power supply system serve as an additional option for drawing power from the ASC 200, for example to be used at an electrical substation.

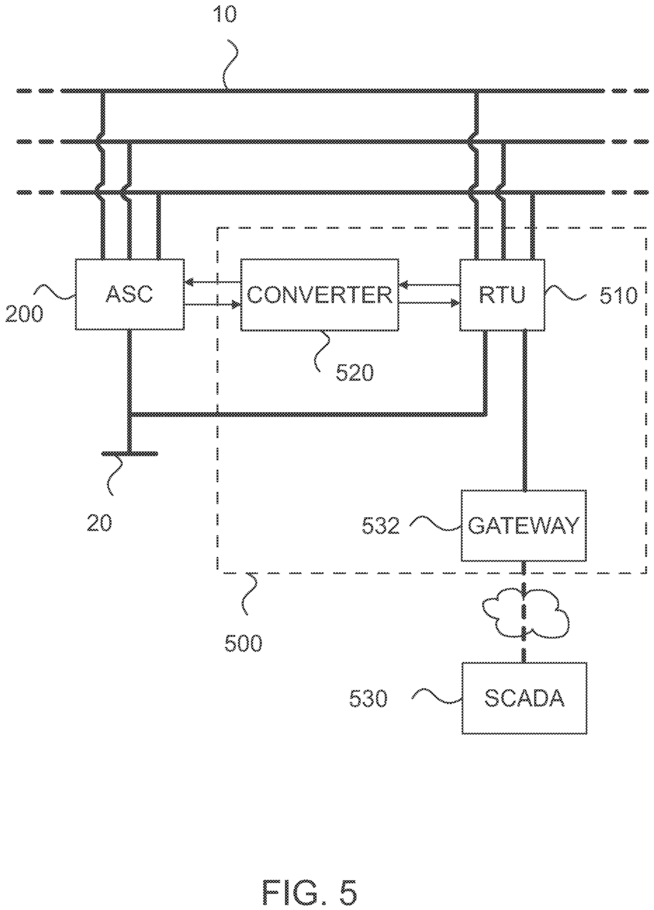

Figure 5 is a schematic diagram of a system 500 for operating the ASC 200 according to an example. The system 500 is adapted to be electrically connected to the ASC 200. Moreover, the system 500 can be adapted to be electrically connected to the network 10, for example to the bus of the network 10. The system 500 may be a local system, for example at an electrical substation or at a distribution transformer. Through its connection to the network 10, for example through the bus of the network 10, the ASC 200 may be connected to a transformer, such as a substation primary transformer or a medium voltage-low voltage transformer of the network 10.

The system 500 comprises an apparatus 510, such as a controller, for operating the ASC 200. The apparatus 510 may be adapted to function as a stand-alone unit but for many typical applications, the apparatus 510 can be adapted to function as a part of a distributed system 530 for controlling the network 10, e.g. it may be a remote terminal unit (RTU), such as an RTU of a SCADA system. The apparatus 510 may be adapted to be connected to the network 10, e.g. to the bus, for determining information indicative of the status of the network 10. The system 500 may comprise a gateway 532 for remote communication of the apparatus 510 with one or more external systems, e.g. with a distributed system 530 such as a SCADA system.

The apparatus 510 is electrically connected to the ASC 200 for operating the ASC 200, for example for adjusting the inductance of the ASC 200, e.g. by adjusting the reluctance of the ASC. The apparatus 510 may be adapted to adjust the inductance of the ASC 200 in the absence and/or presence of an earth fault in the network 10. The apparatus 510 may be adapted to control one or more analog outputs ($V_{COMP}$) for controlling the inductance of the ASC 200, for example by feeding current, such as dc current, to means 240 for adjusting the reluctance of the additional path 220, e.g. to the one or more control windings 342 adapted for forming a virtual air gap 240 for adjusting the reluctance of the arc suppression coil. Voltage- and/or current-based control may be used. The system 500 may comprise a converter 520, e.g. a dc-dc converter or an ac-dc converter, connected between the ASC 200 and the apparatus 510. The apparatus 510 may be grounded to the ground 20 of the network 10, which may correspond to the ground 20 of the ASC 200, for example by a direct connection. The apparatus 510 may also be adapted to control the switch 414 for closing the resistive circuit 410 for drawing power from the network 10. This allows the resistive circuit 414 to be closed based on any conditions defined for the apparatus 510, for example after a threshold time from the onset of the earth fault and/or based on the fault current of the earth fault exceeding a threshold level.

Some examples for design parameters are given in the following, but it should be noted that the ASC 200 may be dimensioned also at other parameter ranges. The ASC 200 may be dimensioned, for example, for a maximum reactive current of 1-2 amperes per phase but also larger reactive currents may be supported. The three phase windings 234 may be adapted to support a current of at least 10 A each, for example 30-60 A per phase, on a continuous basis. The three limbs 232 may be dimensioned so that they are adapted to carry both zero sequence flux and positive sequence flux. This way, the ASC 200 may be dimensioned for both the reactive current and the fault current from the earth fault. The reluctance of the additional path 220 can be made, for example, at least 15-30 percent smaller than that of any or all of the three limbs 232. Correspondingly, the cross-sectional area of the additional path 220 can be at least 20-50 percent larger than that of any or all of the three limbs 232 for providing a path of reduced reluctance at the additional path 220.

The following equations are given to illustrate the functioning of the ASC 200. It is noted that, as always, the equations provide a simplification of the actual physical phenomena taking place in the ASC 200 and it should be understood that they necessarily contain approximations. In the following, the number of turns in one of the three phase windings 234 is denoted by $N_1$ and it is assumed substantially equal in each of the three phase windings 234. Similarly, the reluctance of one of the three limbs 232 is denoted by $R_L$ and it is assumed substantially equal in each of the three limbs 232. In the following, the value for the reluctance of the additional path 220 is $\lambda R_L$ and it may be adjusted by an adjustable reluctance ratio $\lambda$ for the means 240 for adjusting the reluctance of the additional path 220. The adjustable reluctance ratio may have values in the range of, for example, 1-20, and when there is no adjustment $\lambda=1$. The number of turns in the additional winding 360 is denoted by $N_2$ and when $N_2=0$, the situation from ASC 200 of figure 4 reduces to that of figure 3. When the operating frequency of the network 10 is denoted by f, the magnitude of the zero sequence impedance of the network 10 can be approximated as

$$Z_0 = 2\pi f (3N_2 - N_1)^2 \; / \; (1+3\lambda) R_L,$$

whereas the magnitude of the zero sequence flux in the transformer core, and through the additional path 220, can be approximated as

$$\phi_0 = 3V_0 \; / \; 2\pi f (N_1 - 3N_2).$$

The magnitude of the positive sequence impedance of the network 10 can be approximated as

$$Z_1 = 2\pi f N_1^2 \; / \; R_L$$

and the magnitude of the positive sequence flux in the transformer core 210 can be approximated as

$$\phi_1 = V_1 \; / \; 2\pi f N_1.$$

The magnitude of zero sequence voltage $V_0$ of the network 10 typically changes during an earth fault and it may be of several kilovolts, for example 12 kV, corresponding to the magnitude of the phase voltage of the network 10. The magnitude of the positive sequence voltage $V_1$ of the network 10 is a parameter of the network 10, which may be substantially equal to the magnitude of the phase voltage of the network 10. From the equations it is seen that the inclusion of the additional winding 360 in the ASC 200 allows reducing the magnitude of the positive sequence flux $\phi_1$ by increasing the number of turns $N_1$ in the phase windings 234 without decreasing the magnitude of the zero sequence flux $\phi_0$, as long as the increase is compensated by an increase in the number of turns $N_2$ in the additional winding 360.

Regarding the flux distribution in the ASC 200, it is noted that whereas the three limbs 232 are adapted for carrying both zero sequence flux (magnitude $\phi_0$) and positive sequence flux (magnitude $\phi_1$). The first limb 232' may be adapted to carry a combined flux $\phi^i$, the second limb 232'' may be adapted to carry a combined flux $\phi^{ii}$ and the third limb 232''' may be adapted to carry a combined flux $\phi^{iii}$. Assuming that the properties of the three limbs 232 and the three phase windings 234 are substantially equal, the combined flux in each of the three limbs is substantially equal $\phi^i = \phi^{ii} = \phi^{iii}$. In the absence of the additional winding 360, the combined flux has a magnitude of $\phi_0/3 + \phi_1$. However, when the additional winding 360 is included in the ASC 200 with $N_2 > 0$, the magnitude of the combined flux goes towards the value $\phi_0$ as the number of turns in the additional winding 360 increases. Consequently, the magnitude of the positive sequence flux can be made negligible in the three limbs 232. On the other hand, the additional path 220 can be adapted to carry only zero sequence flux $\phi_0$, regardless of the value of $N_2$, and the magnitude of zero sequence flux may be maintained constant by simultaneously increasing both $N_1$ and $N_2$.

The different functions discussed herein may be performed in a different order and/or concurrently with each other.

Any range or device value given herein may be extended or altered without losing the effect sought, unless indicated otherwise. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of the appended claims.

**Claims**

1. An arc suppression coil (200) for a three-phase electric power network (10) comprising:

   a transformer core (210) having three limbs (232), which comprise a first limb (232'), a second limb (232'') and a third limb (232'''), wherein the transformer core defines an additional path (220) for carrying magnetic flux between the opposite ends of the three limbs;
   three separate phase windings (234) comprising a first phase winding (234') wound at the first limb of the transformer core, a second phase winding (234'') wound at the second limb of the transformer core and a third phase winding (234''') wound at the third limb of the transformer core; and
   an additional winding (360) for the additional path;

   **characterized by** the additional winding being wound in direction of subtractive polarity with respect to the three phase windings and connected in series with respect to a combined output (250) of the three phase windings.

2. The arc suppression coil according to claim 1, comprising means (240) for adjusting reluctance of the additional path.

3. The arc suppression coil according to claim 2, wherein the means for adjusting reluctance of the additional path comprise one or more control windings (342) for the additional path.

4. The arc suppression coil according to any of the preceding claims, wherein the transformer core comprises a fourth limb (238) and the additional path goes through the fourth limb.

5. The arc suppression coil according to any of the preceding claims, wherein the reluctance of one or more of the three limbs is larger than the minimum reluctance of the additional path.

6. The arc suppression coil according to any of the preceding claims, wherein the number of turns in the three phase windings is equal or substantially equal.

7. The arc suppression coil according to any of the preceding claims, wherein the reluctance of the first limb, the second limb and the third limb is equal or substantially equal.

8. The arc suppression coil according to any of the preceding claims, wherein the additional winding is wound around the transformer core, for example around a limb and/or a yoke (236).

9. The arc suppression coil according to any of the preceding claims, wherein the number of turns in the additional winding is at most 11 percent of the total number of turns in the three phase windings.

10. The arc suppression coil according to any of the preceding claims, wherein the number of turns in the additional winding is 4-8 percent of the total number of turns in the three phase windings.

11. An arrangement for grounding a three-phase electric power network comprising an arc suppression coil according to any of claims 1-10; wherein the arc suppression coil comprises an output connection and the arrangement comprises means for connecting the three-phase electric power network to ground (20) directly from the output connection.

12. A method of grounding a three-phase electric power network, wherein the three phase lines (12', 12", 12''') of the three-phase electric power network are connected to ground through an arc suppression coil comprising a transformer core having a separate limb and a separate phase winding for each of the three phases of the three-phase electric power network for facilitating a grounding connection, the transformer core defining also an additional path for carrying magnetic flux between the opposite ends of each of the separate limbs;
   **characterized by** utilizing an additional winding for the additional path, wherein the additional winding is wound in direction of subtractive polarity with respect to the three phase windings and connected in series with respect to a combined output of the three phase windings.

13. A method of grounding a three-phase electric power network according to claim 12, wherein the arc suppression coil is directly connected to ground.

14. A method of grounding a three-phase electric power network according to claim 12 or 13, wherein the arc suppression coil is the arc suppression coil according to any of claims 1-10.

**Patentansprüche**

1. Lichtbogenunterdrückungsspule (200) für ein dreiphasiges elektrisches Stromnetzwerk (10), umfassend:

   einen Transformatorkern (210), der drei Schenkel (232) aufweist, die einen ersten Schenkel (232'), einen zweiten Schenkel (232") und einen dritten Schenkel (232''') umfassen, wobei der Transformatorkern einen zusätzlichen Pfad (220) zum Führen von magnetischem Fluss zwischen den gegenüberliegenden Enden der drei Schenkel definiert;
   drei separate Phasenwicklungen (234), umfassend eine erste Phasenwicklung (234'), gewickelt auf dem ersten Schenkel des Transformatorkerns, eine zweite Phasenwicklung (234"), gewickelt auf dem zweiten Schenkel des Transformatorkerns und eine dritte Phasenwicklung (234'''), gewickelt auf dem dritten Schenkel des Transformatorkerns; und
   eine zusätzliche Wicklung (360) für den zusätzlichen Pfad;

   **dadurch gekennzeichnet, dass** die zusätzliche Wicklung in Richtung von subtraktiver Polarität in Bezug auf die drei Phasenwicklungen gewickelt und in Serie in Bezug auf eine kombinierte Ausgabe (250) der drei Phasenwicklungen verbunden ist.

2. Lichtbogenunterdrückungsspule nach Anspruch 1, umfassend Mittel (240) zum Anpassen der Reluktanz des zusätzlichen Pfads.

3. Lichtbogenunterdrückungsspule nach Anspruch 2, wobei die Mittel (240) zum Anpassen der Reluktanz des zusätzlichen Pfads einen oder mehrere Steuerwicklungen (342) für den zusätzlichen Pfad umfassen.

4. Lichtbogenunterdrückungsspule gemäß einem der vorhergehenden Ansprüche, wobei der Transformatorkern einen vierten Schenkel (238) umfasst und der zusätzliche Pfad durch den vierten Schenkel verläuft.

5. Lichtbogenunterdrückungsspule gemäß einem der vorhergehenden Ansprüche, wobei die Reluktanz von einem oder mehreren der drei Schenkel größer als die minimale Reluktanz des zusätzlichen Pfads ist.

6. Lichtbogenunterdrückungsspule gemäß einem der vorhergehenden Ansprüche, wobei die Anzahl der Windungen in den drei Phasenwicklungen gleich oder im Wesentlichen gleich ist.

7. Lichtbogenunterdrückungsspule gemäß einem der vorhergehenden Ansprüche, wobei die Reluktanz des ersten Schenkels, des zweiten Schenkels und des dritten Schenkels gleich oder im Wesentlichen gleich ist.

8. Lichtbogenunterdrückungsspule gemäß einem der vorhergehenden Ansprüche, wobei die zusätzliche Wicklung um den Transformatorkern gewickelt ist, zum Beispiel um einen Schenkel und/oder ein Joch (236).

9. Lichtbogenunterdrückungsspule gemäß einem der vorhergehenden Ansprüche, wobei die Anzahl der Windungen in der zusätzlichen Wicklung höchstens 11 Prozent der gesamten Anzahl der Windungen in den drei Phasenwicklungen beträgt.

10. Lichtbogenunterdrückungsspule gemäß einem der vorhergehenden Ansprüche, wobei die Anzahl der Windungen in der zusätzlichen Wicklung 4-8 Prozent der gesamten Anzahl der Windungen in den drei Phasenwicklungen beträgt.

11. Anordnung zur Erdung eines dreiphasigen elektrischen Stromnetzwerks, umfassend eine Lichtbogenunterdrückungsspule gemäß einem der Ansprüche 1-10; wobei die Lichtbogenunterdrückungsspule einen Ausgabeanschluss umfasst und die Anordnung Mittel umfasst, um das dreiphasige elektrische Stromnetz direkt von dem Ausgabeanschluss mit der Erde (20) zu verbinden.

12. Verfahren zur Erdung eines dreiphasigen elektrischen Stromnetzwerks, wobei die drei Phasenleitungen (12', 12", 12''') des dreiphasigen elektrischen Stromnetzwerks mit der Erde durch eine Lichtbogenunterdrückungsspule verbunden sind, umfassend einen Transformatorkern, der einen separaten Schenkel und eine separate Phasenwicklung für jede der drei Phasen des dreiphasigen elektrischen Stromnetzwerks zur Erleichterung einer Erdungsverbindung aufweist, wobei der Transformatorkern auch einen zusätzlichen Pfad zum Führen eines magnetischen Flusses zwischen den gegenüberliegenden Enden jedes der separaten Schenkel definiert;

**dadurch gekennzeichnet, dass** eine zusätzliche Wicklung für den zusätzlichen Pfad verwendet wird, wobei die zusätzliche Wicklung in Richtung von subtraktiver Polarität in Bezug auf die drei Phasenwicklungen gewickelt und in Bezug auf eine kombinierte Ausgabe der drei Phasenwicklungen in Serie geschaltet ist.

13. Verfahren zur Erdung eines dreiphasigen elektrischen Stromnetzwerks gemäß Anspruch 12, wobei die Lichtbogenunterdrückungsspule direkt mit der Erde verbunden ist.

14. Verfahren zur Erdung eines dreiphasigen elektrischen Stromnetzwerks gemäß Anspruch 12 oder 13, wobei die Lichtbogenunterdrückungsspule die Lichtbogenunterdrückungsspule gemäß einem der Ansprüche 1 bis 10 ist.


**Revendications**

1. Bobine (200) de suppression d'arc pour un réseau électrique triphasé (10) comprenant :

   un noyau (210) de transformateur présentant trois membres (232), qui comprennent un premier membre (232'), un deuxième membre (232") et un troisième membre (232'''), dans laquelle le noyau de transformateur définit un chemin (220) additionnel pour transporter un flux magnétique entre les extrémités opposées des trois membres ;
   trois enroulements de phase (234) séparés comprenant un premier enroulement de phase (234') enroulé au niveau du premier membre du noyau de transformateur, un deuxième enroulement de phase (234") enroulé au niveau du deuxième membre du noyau de transformateur et un troisième enroulement de phase (234''') enroulé au niveau du troisième membre du noyau de transformateur ; et
   un enroulement (360) additionnel pour le chemin additionnel ;

   **caractérisé par le fait que** l'enroulement additionnel est enroulé dans la direction de polarité soustractive par rapport aux trois enroulements de phase et qu'il est relié en série par rapport à une sortie (250) combinée des trois enroulements de phase.

2. Bobine de suppression d'arc selon la revendication 1, comprenant un moyen (240) pour ajuster la réluctance du chemin additionnel.

3. Bobine de suppression d'arc selon la revendication 2, dans laquelle le moyen pour ajuster la réluctance du chemin additionnel comprend un ou plusieurs enroulements de commande (342) pour le chemin additionnel.

4. Bobine de suppression d'arc selon l'une quelconque des revendications précédentes, dans laquelle le noyau de transformateur comprend un quatrième membre (238) et le chemin additionnel passe à travers le quatrième membre.

5. Bobine de suppression d'arc selon l'une quelconque des revendications précédentes, dans laquelle la réluctance d'un ou plusieurs des trois membres est plus grande que la réluctance minimale du chemin additionnel.

6. Bobine de suppression d'arc selon l'une quelconque des revendications précédentes, dans laquelle le nombre de spires dans les trois enroulements de phase est égal ou sensiblement égal.

7. Bobine de suppression d'arc selon l'une quelconque des revendications précédentes, dans laquelle la réluctance du premier membre, du deuxième membre et du troisième membre est égale ou sensiblement égale.

8. Bobine de suppression d'arc selon l'une quelconque des revendications précédentes, dans laquelle l'enroulement additionnel est enroulé autour du noyau de transformateur, par exemple autour d'un membre et/ou d'une culasse (236).

9. Bobine de suppression d'arc selon l'une quelconque des revendications précédentes, dans laquelle le nombre de spires dans l'enroulement additionnel est d'au plus 11 pour cent du nombre total de spires dans les trois enroulements de phase.

10. Bobine de suppression d'arc selon l'une quelconque des revendications précédentes, dans laquelle le nombre de spires dans l'enroulement additionnel est de 4 à 8 pour cent du nombre total de spires dans les trois enroulements de phase.

11. Agencement pour mettre à la masse un réseau électrique triphasé comprenant une bobine de suppression d'arc selon l'une quelconque des revendications 1 à 10 ; dans lequel la bobine de suppression d'arc comprend une connexion de sortie et l'agencement comprend un moyen pour relier le réseau électrique triphasé à la masse (20) directement à partir de la connexion de sortie.

12. Procédé de mise à la masse d'un réseau électrique triphasé, dans lequel les trois lignes de phase (12', 12", 12''') du réseau électrique triphasé sont reliées à la masse au travers d'une bobine de suppression d'arc comprenant un noyau de transformateur présentant un membre séparé et un enroulement de phase séparé pour chacune des trois phases du réseau électrique triphasé pour faciliter une connexion de mise à la masse, le noyau de transformateur définissant également un chemin additionnel pour transporter un flux magnétique entre les extrémités opposées de chacun des membres séparés ;
**caractérisé par** l'utilisation d'un enroulement additionnel pour le chemin additionnel, dans lequel l'enroulement additionnel est enroulé dans la direction de polarité soustractive par rapport aux trois enroulements de phase et relié en série par rapport à une sortie combinée des trois enroulements de phase.

13. Procédé de mise à la masse d'un réseau électrique triphasé selon la revendication 12, dans lequel la bobine de suppression d'arc est directement reliée à la masse.

14. Procédé de mise à la masse d'un réseau électrique triphasé selon la revendication 12 ou la revendication 13, dans lequel la bobine de suppression d'arc est la bobine de suppression d'arc selon l'une quelconque des revendications 1 à 10.

CONVENTIONAL SYSTEM

FIG. 1

FIG. 2

FIG. 3

FIG. 4

FIG. 5

**EP 3 921 911 B1**

**REFERENCES CITED IN THE DESCRIPTION**

**Patent documents cited in the description**

- CN 2202369 Y